# EUROPEAN PATENT APPLICATION

(11) **EP 0 951 856 A2**
(43) Date of publication of application: **27.10.1999**
(21) Application number: 99107973.2
(22) Date of filing: 22.04.1999
(51) Int. Cl.: A47L 7/00

(54) **Suction device**

(30) Priority: 23.04.1998 IT VI980080
(71) Applicant: Capraro, Vittorio, 36057 Arcugnano (IT); Muraro, Alessandro, 36100 Vicenza (IT)
(72) Inventor: Capraro, Vittorio, 36057 Arcugnano (IT); Muraro, Alessandro, 36100 Vicenza (IT)
(74) Representative: Bonini, Ercole

(57) **Abstract**

A suction device (1) for solids and/or liquids that includes a suction unit (2) and a container unit (3) for the sucked materials (41), interconnected by ducting (17) that connect the outlet of the container unit (3) to the inlet of the suction unit (2). Each unit (2; 3) includes distinctly independent receiver bodies (12; 13) each of which is provided with its own suction means (14; 15, 16) to separate the material (41) sucked up by a suction hose (4) connected to the inlet (5) of the container unit (3) by the suction air, separated from the sucked materials, that is channelled to the outside by an exhaust hose (7) connected to the outlet (8) of the suction unit (2).

## Description

The invention in general refers to the civil and industrial cleaning equipment sector and refers specifically to a suction device for solids and/or liquids. It is known that to suck up solids, and sometimes even liquids, special suction devices are used. These find most widespread application in the civil and industrial cleaning services sector and are available in various forms, construction and dimensions depending on the type of service they have to perform.

Specialists in the sector are well aware that one of the most difficult and toilsome work is unquestionably cleaning solid fuel ovens since the deposits being handled are made up of red-hot embers and fine powdered ash, which are both very difficult to handle, the first because of their high temperature and the second because highly volatile.

The catering sector in particular has the difficult task of cleaning ovens used in cooking pizzas or barbecues for the preparation of chargrilled food, which have to be cleaned at the end of each working day when the oven or barbecue is no longer being used.

In the civil sector a similar problem arises when fireplaces or the fire pot of coal or wood burning ranges have to be cleaned.

A way of simplifying the cleaning of said burning equipment could involve the use of known suction devices found on the market, but all attempts to do so have given negative results. In fact, the suction devices found on the market have amply proven their incompatibility for this kind of application since they are constructed with materials that are not fireproof and therefore do not support the high temperatures of the embers.

Furthermore they are provided with filtration devices that are barely effective in withholding the ashes that are sucked up, due to their volatility and the filtered air that is recycled into the environment is not sufficiently pure to be breathed.

This invention intends to overcome these inconveniences.

It is precisely one of the scopes of the invention to produce a suction device capable of sucking up red-hot solid fuels.

Another scope is for the suction device of the invention to accomplish a filtration level of the sucked air superior to the level of filtration achieved by known suction devices.

A further scope is that the invention's filtration device accomplishes a sufficient level of filtration on the air to make it breathable again.

Last but not least, the scope that the suction device of the invention is also capable, if the occasion should arise, to suck up liquids.

These scopes are achieved by producing a suction device for solids and/or liquids that in accordance with the primary claim includes:
- a suction unit linked to a container unit for the sucked materials;
- at least one suction hose with one end connected to a corresponding inlet of said container unit and the other end provided with a nozzle placed against the materials being sucked up;
- means of separation of the materials sucked by the suction air;
- at least one exhaust hose for the air separated from said sucked materials, connected to a corresponding outlet of said suction unit, and is characterised in that said suction unit and said container unit include distinctly independent receiver bodies each of which is provided with its own means of separation, said units being interconnected by means of ducting that connect the outlet of said container unit with the inlet of said suction unit.

According to a preferred constructive form, the container unit includes a first receiver body which houses the first means of separating the materials sucked up by the suction air. In a similar manner the suction unit includes a second receiver body which contains the suction means and second means of separation.

The first receiver body is contained in a third receiver body and between the two a ring-shaped chamber is created communicating with the outside environment. The ring-shaped chamber is filled with a liquid, preferably water, where the outlet opening of the exhaust hose is immersed, connected to the outlet of the suction unit. The suction device invention thereby obtains the advantage of carrying out the cleaning operation of ovens in less unpleasant conditions for the operator.

Equally advantageous, the suction air, after separation from the suspended solids, can be recycled in the environment and be breathed because of the practically perfect filtration and scrubbing treatment it has gone through. The aforementioned scopes and advantages shall be better illustrated during the description of a preferred form of execution of the invention given as a guideline but not a limitation and illustrated in the attached diagrams, where:
- fig. 1 illustrates the axonometric view of the suction device invention;
- fig.'s 2 and 3 illustrate details of the suction device shown in fig. l;

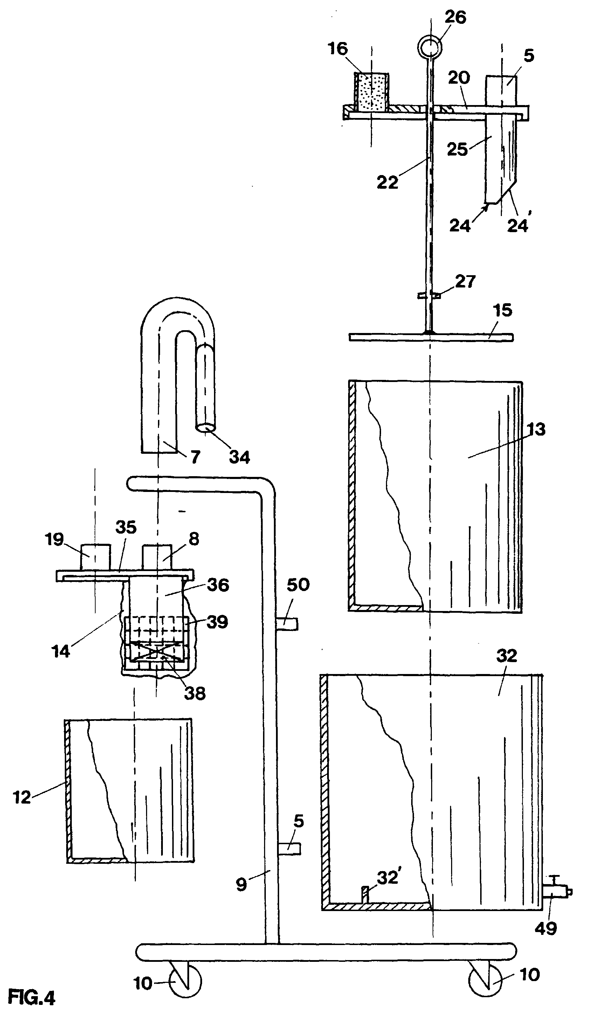

- fig. 4 illustrates a blown up view of the suction device invention;
- fig. 5 illustrates the longitudinal section of a part of the suction device invention;
- fig.'s 6 and 7 illustrate two different views of the air exhaust hose;
- fig. 8 illustrates the longitudinal section of another part of the suction device invention;
- fig. 9 illustrates the side view of the suction device invention when fully assembled;
- fig. 10 illustrates the longitudinal section of the suction device in fig. 9 in its idle position;
- fig. 11 illustrates the suction device in fig. 10 during suction;
- fig. 12 illustrates the suction device in fig. 11 when suction is completed.

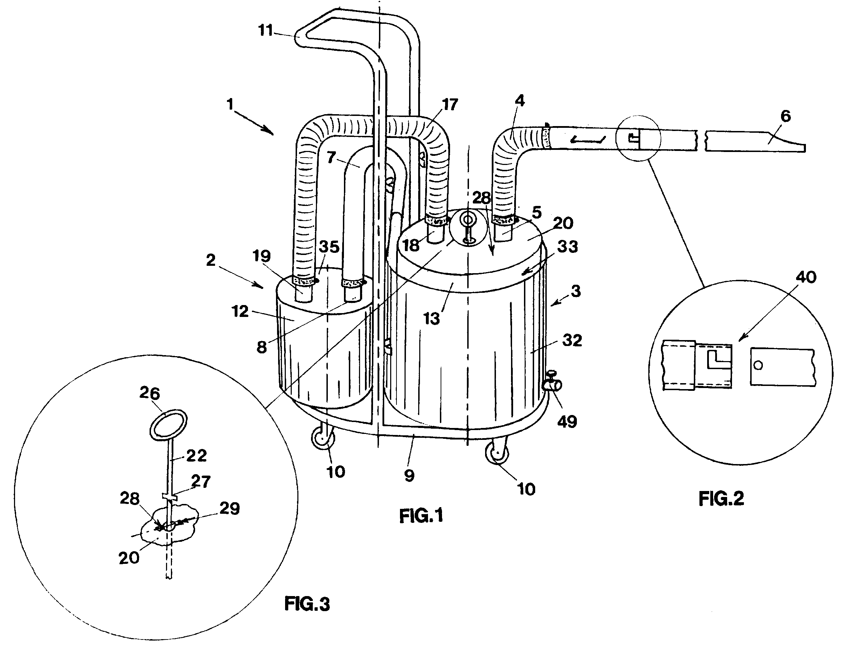

As shown in the figures and particularly in fig. 1 and figures 9 to 12, the suction device invention, generally indicated by 1, includes: a suction unit, generally indicated by 2, linked to a container unit for the sucked materials, generally indicated by 3; a suction hose 4 connected to the inlet 5 of the container unit 3 and provided with a nozzle 6 for the materials being sucked up; an exhaust hose 7 for the air after separation from the sucked materials, connected to outlet 8 of the suction unit 2.

The suction unit 2 and container unit 3 also include means of separation of the materials sucked up by the suction air.

It can also be seen that as a preference, but not obligatorily, the suction unit 2 and container unit 3, have been mounted on a frame 9 provided with wheels 10 and a push-bar 11.

A singular characteristic of the suction device invention is that suction unit 2 and container unit 3 include distinctly independent receiver bodies 12 and 13, each provided with their own means of separation 14 and 15, 16, said units being interconnected by means of ducting 17 that connect the outlet 18 of said container unit 3 with the inlet 19 of said suction unit 2.

A double separation of the solids sucked up by the suction air is thereby obtained and these solids are accumulated in two separate units: the larger grained solids in container unit 3 and only the more finely powdered dust in the suction unit 2.

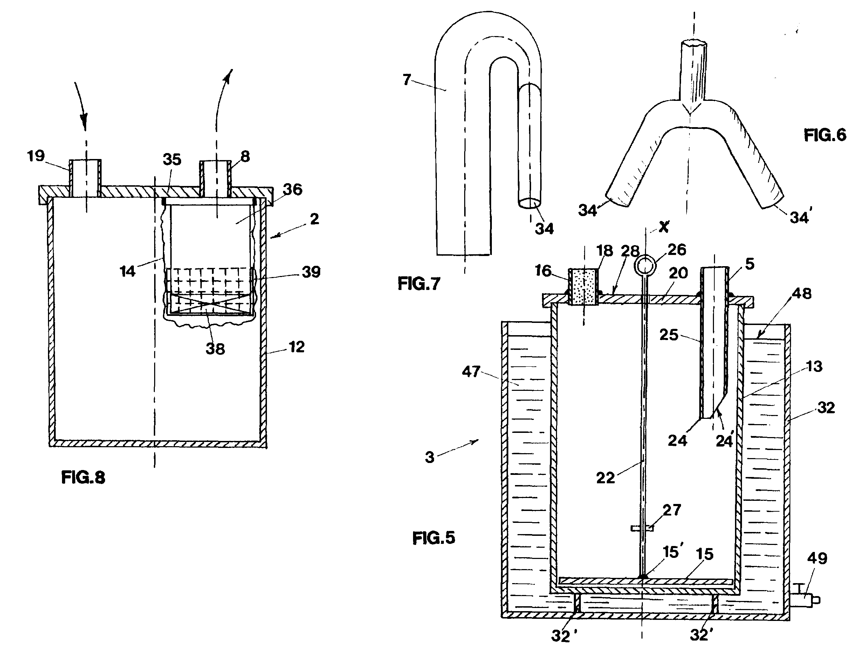

Container unit 3 rightly includes a first receiver body 13 with a lid 20 having a inlet 5 and a outlet 18 communicating with the inside of the receiver itself. Its inside holds the first means of separation of the materials that are sucked up from the suction air, which includes a mobile disk 15 coupled by a swivel 15' to a rod 22 that extends from the lid 20 and a filter core 16 fitted into the outlet 18. To be more precise, as shown in more detail in fig. 5, the mobile disk 15 is inserted between the bottom 23 of the first receiver body 13 and the end 24 of a rigid tube 25, which extends towards the inside of the first receiver body 13, it communicates with inlet 5 and is set crossways to the longitudinal axis Z of the first receiver body 13.

The rod 22, as shown in more detail in fig. 3, has a hand grip 26 that comes out of the lid 20 and is provided with a travel stop consisting of a pin 27 set across it, made to rest on the outside face 28 of the lid 20. To be more precise, the lid 20 has a hole 29 that has the same shape as the form of pin 27 and allows it to pass through when the rod 22 is lifted upwards, if the lengths of pin 27 and hole 29 are aligned. Vice-versa hole 29 prevents pin 27 from passing through when its length is set crossways to the length of the hole 29.

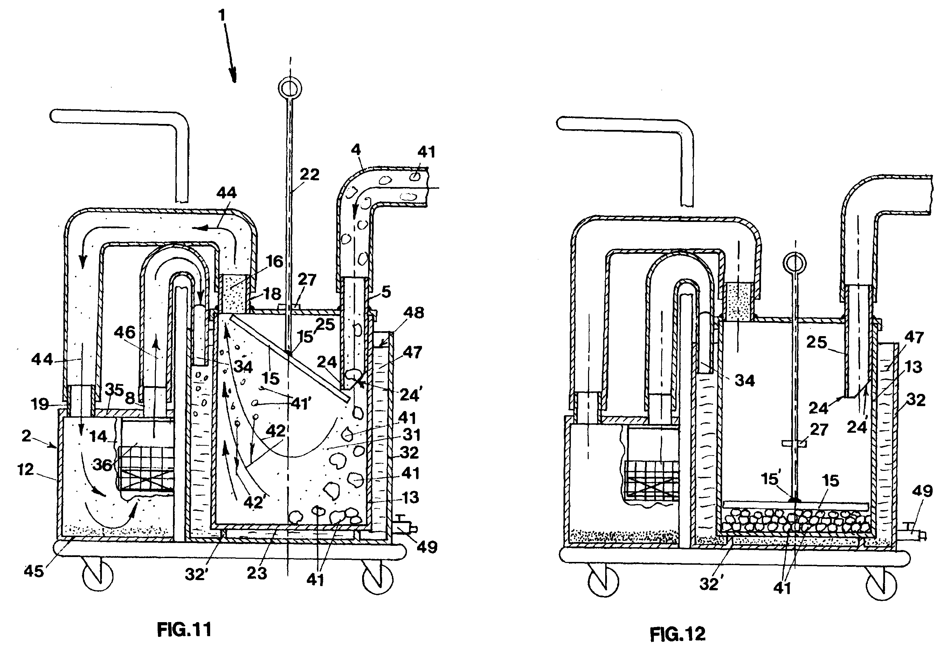

To be precise, when the mobile disk 21 is lifted, since it can rock on swivel 15', it is set at an angle, as seen in fig. 11, when it rests against the end 24 of rigid tube 25.

In this way a collection chamber 31 is created inside the first receiver body 13, that through the sloping mouth 24' of rigid tube 25, inlet 5 and suction hose 4 with nozzle 6, communicates with the environment being sucked.

The first receiver body 13 is contained within a third receiver body 32, in which it is sustained by supports 32', for example on the bottom 23. In this way the space between the first receiver body 13 and third receiver body 32 creates a ring-shaped chamber 33 that communicates with the outside environment and contains a liquid, preferably water, where the outlet openings 34, 34' of exhaust hose 7 are immersed, as illustrated in detail in fig.'s 6 and 7.

In different forms of execution the exhaust hose 7 can have one or more outlet openings that communicate with the ring-shaped chamber through respective holes made in the third receiver 32.

With regards to the suction unit 2, this includes a second receiver body 12 with a lid 35 having an inlet 19 and outlet 8. Inside the second receiver body 12, as seen in more detail in fig.'s 4 and 8, there are the suction means that include an electric fan 36 with a suction opening 38 and second means of separation of the materials sucked up by the suction air. The latter involves a filter hood 37 that is fitted over the electric fan 36, at least around the fan's suction opening 38.

Between the filter hood 14 and suction opening 38 there is a rigid frame 39 that prevents the filter hood from adhering to the suction opening 38.

Outlet 18 of the first receiver body 13 and inlet 19 of the second receiver body 12 are interconnected by means of ducting involving a connecting hose 17.

With regards to its operation, when the suction device is idle, it's configuration is similar to the diagram illustrated in fig.'s 9 and 10 where it can be seen that the mobile disk 15 is resting on the bottom 23 of the first receiver 13.

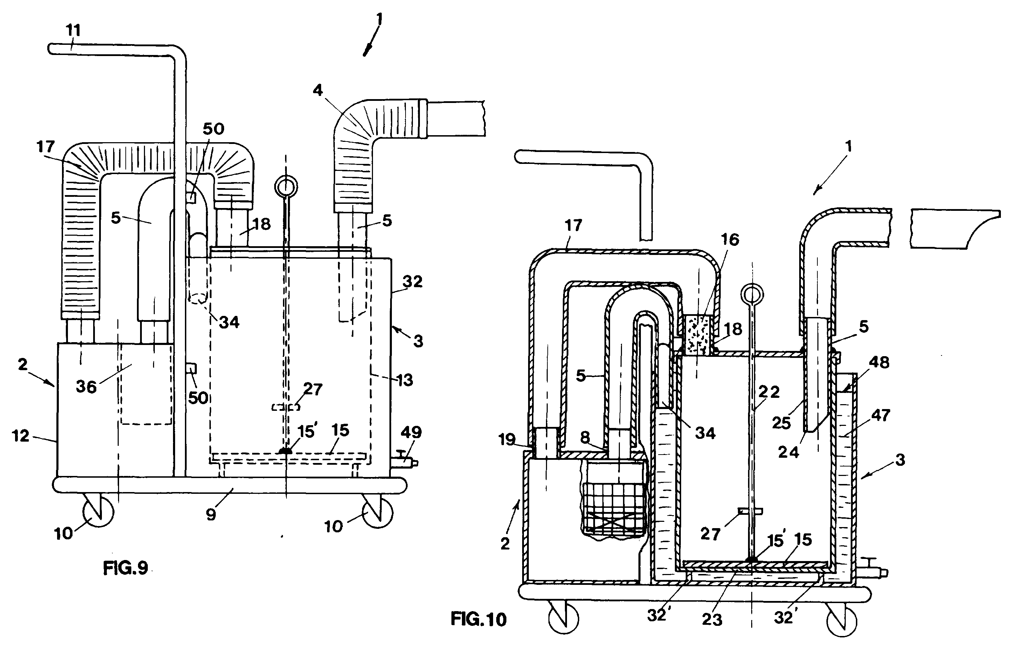

To start up the suction device the electric fan 36 is powered by electric current and the operator pulls hand-grip 26 to lift rod 22 until the mobile disk 15 is set at an angle as seen in fig. 9, touching against end 24 of the rigid tube 25.

The rod 22 is lifted until pin 27 is extracted from hole 29, it is turned either clockwise or anti-clockwise so that pin 27 is set crossways to hole 29 as seen in fig. 3 and is then released. Rod 22 remains raised by the pin 27 resting against the surface 28 of the lid 20 and the mobile disk 15 remains set at an angle as illustrated in fig. 10.

The nozzle 6 as seen in detail in fig. 2 is connected to suction hose 4 by a bayonet coupling, generally indicated by 40, and placed against the material being sucked up so that the pressure drop generated by the electric fan 36 in the second receiver 12 and also in collection chamber 31 through the connecting hose 17, creates a pressure drop in suction hose 4. The material sucked 41 through nozzle 6 enters the collection chamber 31 where it falls to the bottom of receiver 13 while the air flows in direction 42 towards the filter core 16 that withholds other smaller solids 41' that also fall to the bottom in direction 42'.

The air then flows along the connecting hose 17 in direction 44 and reaches the second receiver 12 where it undergoes further filtration by passing through the filter hood 14 that encases the electric fan 36. The material filtered out having a fine powdery form indicated by 45 accumulates on the bottom of the second receiver 12, while the air continues in direction 46 along the exhaust hose 7 until it reaches the outlet openings 34, 34' which are immersed in the water 47 that fills the cavity 33. The air bubbles through the water 47 and is thereby further purified of the last remaining solid particles that are released to the water 47 before freely expanding in the outside environment, spontaneously bubbling up from the open surface 48. The suction device and all its parts, especially those in contact with the solid material 41 consisting of red-hot embers, are made in stainless steel, preferably AlSl 316 or equivalent.

On having finished cleaning, the embers 41 accumulated in the collection chamber 31 are extinguished by depriving them of the oxygen that favours their combustion. This is achieved by lowering rod 22 as seen in fig. 10 so that the mobile disk 15 compresses the red-hot embers 41 against the bottom 23.

The existence of the water cavity 47 not only acts as a filter system for the air before it is recycled into the environment, it also provides a dispersion of the heat from the red-hot embers 41 that are going out. This is an advantage since it reduces the exchange of heat with the outside and makes sure that the surface of the third receiver 32 does not reach temperatures that could harm any persons that may touch it.

For periodical cleaning of the suction device it will be enough to disconnect the suction, exhaust and connecting hoses, open the lids of the receivers, eventually remove the actual receivers from the support frame and clean them. There is a cock 49 on the bottom of the third receiver 32 to drain the water 47. When the device is not in operation, the suction hose 4 is disconnected from the inlet 5 and hung on the supports 50 provided for this purpose on frame 9. The suction device, for what has been seen, thus accomplishes all the scopes set.

It is evident that the suction device invention may not only be used to suck up red-hot material such as for instance, embers from a range or any other hot material, it may also be usefully implemented to suck up any other type of material, including liquids and eventually also solid debris of various nature. Even though the invention has been described with reference to the figures illustrated in the attached diagrams, it is evident that it may be subject to numerous modifications and variants in its execution, all falling under the concept of the invention expressed by the attached claims.

## Claims

1. Suction device (1) for solids and/or liquids including:
- a suction unit linked to a container unit for the materials sucked;
- at least one suction hose with one end connected to a corresponding inlet of said container unit and the other end provided with a nozzle placed against the materials to be sucked;
- means of separation of the materials sucked by the suction air;
- at least one exhaust hose for the air separated from said sucked materials, connected to a corresponding outlet of said suction unit,
**characterised in that** said suction unit (2) and said container unit (3) include distinctly independent receiver bodies (12; 13) each of which is provided with its own means of separation (14; 15, 16), said units being interconnected by means of ducting (17) that connect the outlet (18) of said container unit (3) with the inlet (8) of said suction unit (2).

2. Suction device (1) according to claim 1) **characterised in that** said container unit (3) includes a first receiver body (13) with a lid (20) having an inlet (5) and an outlet (18), within which there is the first means of separation (15, 16) provided to separate said materials sucked by said suction air.

3. Suction device (1) according to claim 2) **characterised in that** said first receiver body (13) is contained in a third receiver body (32) which define the limits of a ring-shaped chamber (33) that communicates with the outside environment and contains a liquid (47) where one or more outlet openings (34, 34') are immersed belonging to said exhaust hose (7).

4. Suction device (1) according to claim 1) **characterised in that** said suction unit (2) includes a second receiver body (12) with a lid (35) having an inlet (8) and an outlet (19), which holds suction means (36) and second means of separation (14) provided to separate said materials sucked by said suction air.

5. Suction device (1) according to claim 2) **characterised in that** said first means of separation includes a mobile disk (15) fit inside said first receiver body (13) and movably coupled to a rod (22) that extends from the lid (20) of said first receiver body (13), said mobile disk (15) being inserted between the bottom (23) of said first receiver body (13) and the end (24) of a rigid tube (25), which extends towards the inside of the receiver body (13) and communicates with its inlet (5).

6. Suction device (1) according to claim 5) **characterised in that** said rod (22) has an external hand-grip (26) and travel stops (27) to lock said mobile disk (15) at an angle and raised from the bottom (23), set against the end (24) of said rigid tube (25).

7. Suction device (1) according to claim 6) **characterised in that** said mobile disk (15) set at an angle, defines together with the bottom (23) of said first receiver body (13) a collection chamber (31) that communicates with said rigid tube (25).

8. Suction device (1) according to claims 6) or 7) **characterised in that** said rigid tube (25) is off-centre to the longitudinal axis of said first receiver body (13) and has a sloping opening (24') at its end (24).

9. Suction device (1) according to claim 6) **characterised in that** said travel stops involve a pin (27) set crossways to said rod (22), which rests on the outer surface (28) of the lid (20) of said first receiver body (13).

10. Suction device (1) according to claim 9) **characterised in that** said lid (20) has a hole (29) having the same shape as said pin (27) to allow passage of the actual pin (27) when their respective lengths are aligned and to prevent passage of the pin (27) when the respective lengths are set crossways to each other.

11. Suction device (1) according to claim 2) **characterised in that** said first means of separation also involves also a filter core (16) associated to said outlet (18) of said first receiver body (13).

12. Suction device (1) according to claim 3) **characterised in that** suction means involves at least one electric fan (36) fixed to the lid (35) of said second receiver body (12) and having the suction clearance (38) directed towards the inside of the second receiver body (12) and the blower clearance directed towards the outlet (8) of the second receiver body (12).

13. Suction device (1) according to claim 12) **characterised in that** said second means of separation involves a filter hood (37) that covers said electric fan (36) at least over the suction clearance (38).

14. Suction device (1) according to claim 13) **characterised in that** said filter hood (37) is kept away from said suction clearance (38) by a rigid spacer frame (39) mounted on the exterior of said electric fan (36).

15. Suction device (1) according to claim 3) **characterised in that** said first receiver body (13) has in its bottom a drain cock (49) for said liquid (47) contained in said ring-shaped chamber (33).

16. Suction device (1) according to claim 1) **characterised in that** said suction unit (2) and said container unit (3) are supported by a frame (9), which is provided with wheels (10) and a push-bar (14).
